Europäisches Patentamt

European Patent Office

Office européen des brevets

(19) ⑲

(11) Publication number: **0 290 659 B1**

(12) **EUROPEAN PATENT SPECIFICATION**

(45) Date of publication of patent specification: **16.10.91**  (51) Int. Cl.⁵: **B09B 1/00, C02F 11/00**

(21) Application number: **87107075.1**

(22) Date of filing: **15.05.87**

(54) Rigidification of semi-solid agglomerations.

(43) Date of publication of application:
**17.11.88 Bulletin 88/46**

(45) Publication of the grant of the patent:
**16.10.91 Bulletin 91/42**

(84) Designated Contracting States:
**DE FR GB**

(56) References cited:
| | |
|---|---|
| DE-A- 2 430 371 | FR-A- 2 462 396 |
| FR-A- 2 471 265 | US-A- 4 028 130 |
| US-A- 4 079 003 | US-A- 4 449 849 |
| US-A- 4 460 292 | US-A- 4 652 180 |
| US-A- 4 668 128 | |

(73) Proprietor: **SOLI-TECH, INC.**
**P.O. Box 541**
**Kawkawlin Michigan 48631(US)**

(72) Inventor: **Hartley, Tyrus W.**
**443 River Drive**
**Bay City, Michigan 48706(US)**
Inventor: **Hartley, Dwight N.**
**1909 S. Alp Street**
**Bay City, Michigan 48706(US)**

(74) Representative: **Tetzner, Volkmar, Dr.-Ing. Dr. jur.**
**Van-Gogh-Strasse 3**
**W-8000 München 71(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a method of rigidifying a semi-solid agglomeration of solids and liquids of the kind resulting from the drilling of oil and gas wells, said agglomeration being contained in a pit having a depth greater than that of said agglomeration.

In the drilling of an oil or gas well it is conventional to employ a drilling rig to power a rotary, hollow drill pipe at the lower end of which is a drill bit which is advanced downwardly into the earth. Operation of the drilling apparatus is accompanied by the delivery of water to the upper end of the drill pipe and under such force as to cause the water to flush the cuttings from the bottom of the bore and return and carry them to the surface. Conventionally, the water is supplemented with clayey material commonly referred to as drilling mud. The drilling mud may contain a number of ingredients, including fresh or salt water, so as to render the mud sufficiently plastic to flow while retaining sufficient body or viscosity to effect sealing of the walls of the well bore and to maintain in suspension the drill cuttings as the latter are moved upwardly of the well bore Typical muds are provided by Wyoming bentonite or sodium montmorillonite. Another clay commonly used for mud is attapulgite.

The particular kind of clay or similar substance used for a drilling mud will depend upon a number of factors which are of no particular significance to the method herein disclosed . All of the materials used for drilling muds, however, have the common characteristic that, when the drilling operations are completed, the spent muds are agglomerated with well cuttings and liquids, usually brine, in a semi-solid slurry or mass having no form stability or structural strength and a consistency similar to that of toothpaste with a funnel test viscosity of between about 40 to 60 sec. 1.

At the completion of well drilling operations a large quantity of the agglomerated materials must be disposed of. These materials may not simply be scattered about the well site, or even collected in a pit adjacent the drilling site, for several reasons . One reason is that the chlorides from the brine will contaminate the soil and adjacent ground waters. Another reason is that, since the agglomeration has no appreciable stability, it is not possible to restore the ground to the condition it had prior to the excavation of the pit. That is, excavated earth cannot simply be returned to the pit with the agglomerated materials inasmuch as the latter would ooze from the pit and result in the formation of a quagmire.

Because of the difficulties encountered heretofore in disposing of well cuttings and materials associated therewith at the well site, it has been the practice to load such materials in tank trucks and transport them to a central disposal site. The time and expense of such practice make the cost of such disposal exorbitant.

US-A-4,652,180, upon which the preamble of claim 1 is based, discloses a process for solidification of liquid form wastes collected in an encatchment. The approach adopted in this method is a mixing of a gaseous suspension of a cementing solid with the liquid in the encatchment. The carrier churns up the liquid which helps to disseminate the cementing solid into the liquid. Within a short period of time, the mixture of cementing material and waste liquid coalesces into solid form. The finally solidified waste liquid of the encatchment is frangible solid, not some monolithic concrete mass.

US-A-4,028,130 discloses a method of treating a sludge from a municipal sewage plant comprising admixing said sludge with lime and fly ash such that the final composition of said admixture has a moisture content of 5 - 50 % and the dry solids therein comprise 1 - 15 % lime, 1 - 50 % digested sewage sludge solids, 20 - 90 % fly ash, and permitting said admixture to harden under atmospheric conditions.

It is the object of the invention to dispose of residues from the drilling of oil and gas wells at the well site and in such manner as to avoid ecological contamination and at the same time to enable the land adjacent the drilling site to be restored to its original appearance and use.

This object is solved according to the invention by a method comprising permitting the agglomeration within said pit to stand for a period of time sufficient to cause heavier solids to settle and excess liquids to accumulate atop such agglomeration; removing at least a substantial portion of said excess liquids; adding to and mixing with the agglomeration in said pit a quantity of meal comprising cement kiln dust, a quantity of a cementitious binder and further an aggregate to form a substantially homogeneous mass, the quantity of said meal, said binder, and said aggregate added to said agglomeration being insufficient to overflow said pit; and curing said mass to form a substantially rigid matrix, said agglomeration comprising between about 70 and 75 weight percent of said mass, said meal comprising between about 4 and 11 weight percent of said mass, said aggregate comprising between about 20 and 25 weight percent of said mass and said binder comprising between about 0,3 and 1,0 weight percent of said mass.

A process of solidifying the semi-solid residues from well drilling operations is disclosed in the following description and illustrated in the accompanying drawings, wherein:

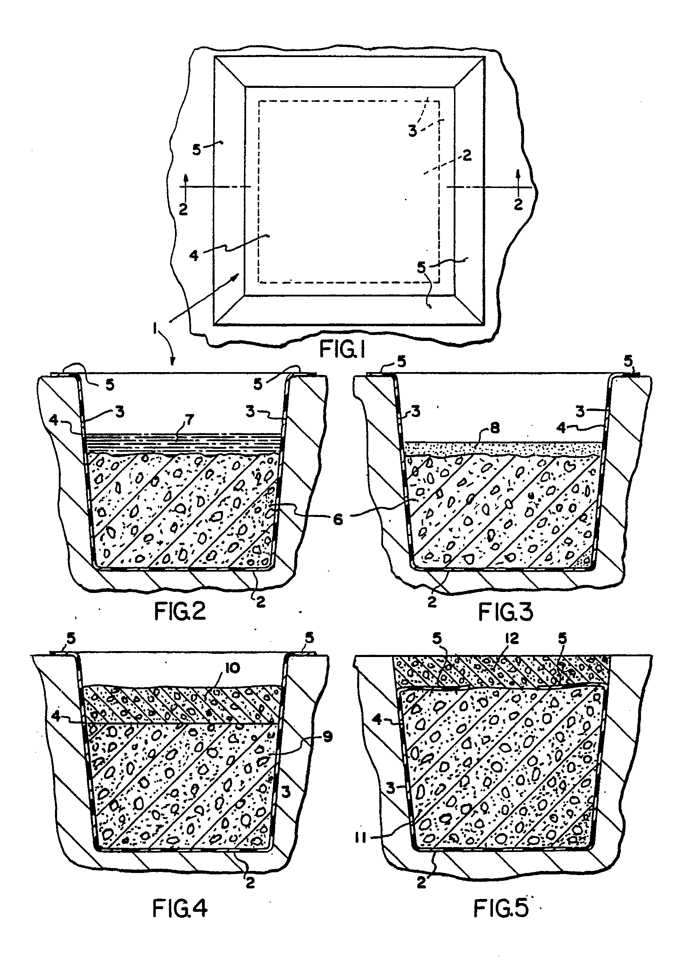

Figure 1 is a top plan view of a typical pit that has been excavated adjacent a well-drilling site:

Figure 2 is a sectional view taken on the line 2-2 of Figure 1 and illustrating one stage of the method:

and

Figures 3-5 are views similar to Figure 2 but illustrating successive stages in the performance of the method.

Preparatory to the practice of the method according to the invention an open top enclosure or pit , is excavated adjacent the site at which an oil or gas well is to be drilled. The pit 1 preferably is square in plan view, but can be of any other shape. The pit also preferably has a flat bottom 2 and downwardly sloping side walls 3. Again, however, the particular shape of the pit's bottom and side walls may vary. It is preferred, however, that the pit have a regular, geometric configuration, thereby facilitating computation of the pit's volume.

Following excavation of the pit, a moisture impervious liner 4 formed of polyvinylchloride or the like is placed in the pit so as to span the bottom, cover the side walls, and extend away from the pit over the upper surface of the adjacent ground. The marginal edges 5 of the liner thus form a protective apron adjacent the upper marginal edges of the pit.

In the drilling of a well it is conventional practice to utilize fluids and clayey materials, referred to as drilling muds, to assist in the support of the drill pipe and to flush chips or cuttings from the bottom of the bore for discharge from the mouth of the bore. In the process of drilling it is common for the drill to pass through levels containing brine which becomes mixed with the mud and cuttings and is discharged from the mouth of the bore as an aqueous agglomeration. These materials conventionally are delivered to a settling tank from which some portion of the mud may be reclaimed for recirculation through the well bore. Eventually, however, the used mud becomes spent and must be replaced with fresh mud. The spent mud, along with cuttings, brine, and other materials resulting from the drilling operation are discharged to the pit 1, thereby enabling the settling tank to be used repeatedly during the drilling operation.

At the conclusion of the drilling operation the remaining contents of the settling tank are discharged to the pit 1, but the depth of the pit preferably is 3-6 feet greater than the height of the materials discharged to the pit. These materials comprise a semi-solid agglomeration 6 composed of the liquid-saturated mud, the cuttings, and the liquids. The liquids conventionally constitute a brine which, in some sections of the country, is composed of about 75% water and 25% water soluble sodium chloride and other soluble salts. The constituency of the brine is not critical to the method, although it is desirable that the brine contain a high percentage of chlorides.

Following discharge of the agglomeration and liquids to the pit, the materials are permitted to stand for a period of time, such as one to two days, more or less, to permit the denser fractions of the contents to settle to the bottom of the pit. This will result in the provision of a layer of excess liquid 7 atop the agglomeration 6. Thereafter, the excess liquid is pumped into tank trucks or the like and transported elsewhere for disposal. The residue in the pit still contains a high percentage of liquid as a consequence of which the agglomeration comprises a slurry having a consistency corresponding substantially to that of toothpaste and no appreciable stability or load bearing strength.

Following removal of the layer of excess liquid from the pit, a quantity of meal 8 comprising cement kiln dust (CKD) and a quantity of a cementation binder such as Type I cement is added to the contents of the pit 1. Preferably, this mixture of CKD and a cementitious binder is delivered to the site in a truck equipped with pneumatic discharge means which feeds the mixture to a portable cyclone mounted at the free end of a boom carried by a crawler-type vehicle which has a backhoe. The vehicle may traverse the perimeter of the pit so as to discharge the mixture in a substantially uniform layer over the entire surface of the pit's contents. For best results, the width of the pit should not be so great that the boom cannot reach at least half way across the pit.

CKD is a waste product resulting from the manufacture of cement. In the United States alone CKD accumulates at the rate of several million tons per year and represents a significant pollution control problem confronting the cement industry. CKD is not a hazardous waste, but is produced in such large volume that it poses a severe disposal problem. Some commercial uses have been proposed for CKD, such as its being used as a substitute for lime, but the extent of such usage thus far has been relatively small in comparison to its production. Utilization of CKD as a major constituent used in the process according to the invention represents the largest commercial use of CKD presently known.

Following the addition of the CKD and the cementitous binder to the pit's contents, these materials and the agglomeration 6 are mixed mechanically by means of the aforementioned backhoe to form a substantially homogenous mixture 9. The mixing causes the CKD, which is highly hygroscopic, to encapsulate the solids of the agglomeration. The mixing also causes the cement phase to coat the encapsulated solids and serve as a binder therebetween.

Following mixing of the agglomeration, the CKD and the cementitious binder, the mixture 9 combined with an aggregate 10. The aggregate may comprise the earth, stones, gravel, sand, clay, and the like which

3

were excavated in the formation of the pit 1. The aggregate may be added to the pit by means of backhoes, bulldozers, and the like and is mixed with the mixture of agglomeration CKD and cementitious binder, by means of backhoes until there is a substantially homogenous mass 11. The combined amount of CKD, cementitious binder, and aggregate added to the pit is insufficient to overflow the latter. The solids of the agglomeration 6 and the solids of the aggregate 10 will be encapsulated by the CKD and coated with the cement. Following formation of the mass 11, the latter is permitted to cure and form a rigid matrix. The curing time will vary according to climatic conditions, but a period of 12 to 24 hours usually is sufficient to enable the mass to rigidify adequately. The presence of chloride as a constituent of the mass accelerates the curing thereof.

A field test for rigidification of the matrix may be performed by the use of a backhoe. The boom of the backhoe may be extended over the bit and the bucket at the free end of the boom placed atop the matrix. The boom then may be extended. If the bucket enters the matrix, curing is incomplete. If the crawler vehicle on which the boom is carried is caused to tilt, however, then curing is complete. The matrix formed according to the invention conforms to the compaction requirements of the Resource Conservation and Recovery Act of 1976 (RCRA).

In some jurisdictions it is required to cover the matrix with a moisture impervious liner. If so, the marginal edges 5 of the liner may be turned inwardly so as to overlie the upper surface of the matrix. Any unlined area which may exist then may be covered by an additional liner. Thereafter, additional aggregate 12 resulting from the excavation of the pit may be used to fill the pit. The excavated material in excess of that which can be returned to the pit then may be distributed over the adjacent area or trucked elsewhere.

The method according to the invention enables the pit site to be returned to its original condition following drilling operations with the exception that the site includes the buried, rigid matrix. The rigidity of the matrix is sufficient to support farm vehicles, thereby enabling the land to be farmed if desired.

Cement kiln dust furnished by a number of cement manufacturers has been used in the practice of the process. Although the specific chemical analysis of each manufacturer's CKD may vary, and successive batches from each manufacturer often also may vary, the variations are relatively small and do not appear to have any effect on the rigidification of the agglomeration.

A chemical analysis of CKD used in the method and furnished by one cement manufacturer is as follows:

| Compound | Weight Percent |
|---|---|
| $CaO$ | 51.64 |
| $SiO_2$ | 14.76 |
| $Al_2O_3$ | 4.64 |
| $Fe_2O_3$ | 1.97 |
| $MgO$ | 1.56 |
| $SO_3$ | 10.30 |
| $K_2O$ and $Na_2O$ | 3.26 |

An analysis of another manufacturer's CKD used in the method is as follows:

| Compound | Weight Percent |
|---|---|
| $CaO$ | 44.86 |
| $SiO_2$ | 13.94 |
| $Al_2O_3$ | 4.25 |
| $Fe_2O_3$ | 2.61 |
| $MgO$ | 2.74 |
| $SO_3$ | 7.05 |
| $K_2O$ and $Na_2O$ | 4.90 |

An average analysis of all CKDs used thus far is as follows:
CaO 49.0%

SiO$_2$ 15.3%
Al$_2$O$_3$ 3.8%
Fe$_2$O$_3$ 2.3%
MgO 2.2%
SO$_3$ 8.7%
K$_2$O and Na$_2$O 4.2%

All of the CKDs used thus far include a substantial quantity of oxides which react with the liquids in agglomeration to form water insoluble hydroxides.

Chemical analyses of typical agglomerated materials delivered to the pit 1 revealed that solids constituted about 54% of such materials and the remainder of the material was a brine composed of about 25% calcium, potassium, and sodium chlorides and traces of other minerals.

The specific proportions of ingredients used in the method according to the invention may vary according to the kinds of drilling muds and liquids used, as well as the kinds and particle sizes of the well cuttings and the aggregate used. In practice it has been found that the following ranges of proportions of the most commonly used materials produce satisfactory results:

| Material | Weight Percent |
|---|---|
| Drilling mud (agglomeration) | 70-75 |
| Cement kiln dust | 4-11 |
| Cement (cementitious binder) | 0.3-1.0 |
| Aggregate | 20-25 |

The particular order in which the materials are mixed does not appear to make any significant difference in the effectiveness of the method. It is easier to obtain a good mixture of the agglomeration, the CKD and the cementitious binder by mixing them prior to the addition of the aggregate, however, because of the fluidity of the agglomeration and the lower quantity of CKD and cementitious binder compared to that of the aggregate.

Neither is it necessary to place the CKD and cementitious binder atop the agglomeration prior to mixing. These substances could be added to and mixed with the agglomeration in bucketsfull, and the same observation applies to the addition and mixing of the aggregate. Applying these materials in layers, however, facilitates the measurement of the respective materials.

Once the agglomeration is in condition for solidification, i.e. it has settled and the excess liquid has been removed, it requires only between about 2 and 3 hours to mix about 1,050,000 pounds of agglomerated materials with about 70,000 pounds of CKD and cementitious binder and about 325,000 pounds of aggregate. The method, therefore, is relatively quickly performed with consequent economy.

**Claims**

1. A method of rigidifying a semi-solid agglomeration (6) of solids and liquids of the kind resulting from the drilling of oil and gas wells, said agglomeration being contained in a pit (1) having a depth greater than that of said agglomeration, characterized in that said method comprises permitting the agglomeration within said pit to stand for a period of time sufficient to cause heavier solids to settle and excess liquids (7) to accumulate atop such agglomeration; removing at least a substantial portion of said excess liquids; adding to and mixing with the agglomeration in said pit a quantity of meal (8) comprising cement kiln dust, a quantity of a cementitious binder, and further an aggregate (10) to form a substantially homogeneous mass (11), the quantity of said meal, said binder, and said aggregate added to said agglomeration being insufficient to overflow said pit; and curing said mass to form a substantially rigid matrix, said agglomeration comprising between about 70 and 75 weight percent of said mass, said meal comprising between about 4 and 11 weight percent of said mass, said aggregate comprising between about 20 and 25 weight percent of said mass and said binder comprising between about 0,3 and 1,0 weight percent of said mass.

2. The method according to claim 1 further characterized in that the quantities of solids and liquids in said agglomeration (6) are such that it has the consistency of a slurry having no substantial structural strength.

3. The method according to claim 1 further characterized by covering the bottom and sides of said pit with a moisture impervious liner (4) prior to introducing said agglomeration into said pit.

4. The method according to claim 1 further characterized in that said pit has a depth greater than the height of said matrix, and covering said matrix with additional aggregate.

5. The method according to claim 1 further characterized in covering said matrix with a moisture impervious liner (4) prior to covering said matrix with said additional aggregate.

6. The method according to claim 1 further characterized in that said meal is composed of a powder containing a substantial quantity of oxides which react with liquids in said agglomeration to form water insoluble hydroxides.

7. The method according to claim 6 further characterized in that said quantity of oxides includes calcium oxide.

8. The method according to claim 1 further characterized in that said agglomeration includes brine.

9. The method according to claim 1 further characterized in that said meal comprises cement kiln dust and said cementitious binder comprises cement.

**Revendications**

1. Un procédé de solidification d'agglomérats semi-solides (6) de solides et de liquides du type résultant du forage de puits de pétrole et de gaz, lesdits agglomérats étant contenus dans une fosse (1) dont la profondeur est supérieure à celle desdits agglomérats, caractérisé en ce qu'il consiste à permettre aux agglomérats situés à l'intérieur de ladite fosse d'y rester pendant un laps de temps suffisant pour amener des solides plus lourds à se déposer et des liquides en excès (7) à s'accumuler au sommet de tels agglomérats ; enlever au moins une partie sensible desdits liquides en excés ; ajouter auxdits agglomérats, dans ladite fosse, une quantité d'une farine (8) comprenant de la poudre de four à ciment, un liant de type ciment ainsi qu'un agrégat (10), et les mélanger, pour former une masse sensiblement homogène (11), la quantité de ladite farine, dudit liant et dudit agrégat ajoutés auxdits agglomérats n'étant pas suffisante pour déborder de ladite fosse ; et traiter ladite masse pour former une matrice sensiblement solide, lesdits agglomérats constituant entre 70 et 75 % en poids environ de ladite masse, ladite farine constituant entre 4 et 11 % en poids environ de ladite masse, ledit agrégat constituant entre 20 et 25 % en poids environ de ladite masse et ledit liant constituant entre 0,3 et 1,0 % en poids environ de ladite masse.

2. Le procédé selon la revendication 1 caractérisé en outre en ce que les quantités de solides et de liquides dans lesdits agglomérats (6) sont telles qu'ils présentent la consistance d'une boue sans résistance structurelle sensible.

3. Le procédé selon la revendication 1 caractérisé en outre par le recouvrement du fond et des côtés de ladite fosse à l'aide d'un chemisage (4) imperméable à l'humidité avant l'introduction desdits agglomérats dans ladite fosse.

4. Le procédé selon la revendication 1 caractérisé en outre en ce que ladite fosse est d'une profondeur supérieure à la hauteur de ladite matrice, et en ce que ladite matrice est recouverte à l'aide d'agrégat additionnel.

5. Le procédé selon la revendication 1 caractérisé en outre par un recouvrement de ladite matrice à l'aide d'un chemisage imperméable à l'eau (4) avant le recouvrement de ladite matrice par ledit agrégat additionnel.

6. Le procédé selon la revendication 1 caractérisé en outre en ce que ladite farine est composée d'une poudre contenant une quantité sensible d'oxydes qui réagissent avec des liquides desdits agalomérats pour former des hydroxydes insolubles dans l'eau.

7. Le procédé selon la revendication 6 caractérisé en outre en ce que ladite quantité d'oxyde comprend de l'oxyde de calcium.

8. Le procédé selon la revendication 1, caractérisé en outre en ce que lesdits agglomérats comprend une saumure.

9. Un procédé selon la revendication 1 caractérisé en outre en ce que ladite farine comprend de la poussière de four à ciment et en ce que ledit liant de type ciment comprend du ciment.

**Patentansprüche**

1. Verfahren zur Verfestigung von halbfesten Agglomeraten (6), die Feststoffe und flüssige Bestandteile enthalten und beim Bohren von Öl- und Gasbohrschächten anfallen, wobei diese Agglomerate in einer Grube (1) enthalten sind, deren Tiefe größer als die Höhe der Agglomerate ist, gekennzeichnet durch folgende Verfahrensschritte:
   - man läßt die Agglomerate in der Grube während einer Zeitdauer stehen, die ausreicht, um schwerere Feststoffe sich absetzen und überschüssige Flüssigkeit (7) sich an der Oberseite dieser Agglomerate ansammeln zu lassen;
   - man entfernt wenigstens einen wesentlichen Teil dieser überschüssigen Flüssigkeit;
   - man gibt eine Menge Mehl (8), enthaltend Zementofenstaub, eine Menge von zementhaltigem Bindemittel und weiterhin einen Zuschlagsstoff (10) zu den Agglomeraten in dieser Grube und vermischt diese zugegebenen Stoffe mit den Agglomeraten, so daß sich eine im wesentlichen homogene Masse (11) bildet, wobei die Menge des Mehles, des Bindemittels und des Zuschlagsstoffes, die den Agglomeraten zugegeben werden, nicht so groß ist, daß die Grube überläuft;
   - schließlich härtet man diese Masse aus, so daß sich eine im wesentlichen feste Matrix ergibt, wobei die Agglomerate etwa 70 bis 75 Gew.% der genannten Masse ausmachen, das Mehl etwa zwischen 4 und 11 Gew.% der Masse beträgt, der Zuschlagsstoff zwischen etwa 20 und 25 Gew.% der Masse und das Bindemittel etwa zwischen 0,3 und 1,0 Gew.% der Masse.

2. Verfahren nach Anspruch 1, dadurch gekennzeichnet, daß die Mengen der Feststoffe und Flüssigkeiten in den Agglomeraten (6) derart sind, daß die Agglomerate die Konsistenz eines Schlammes besitzen, der keine nennenswerte strukturelle Festigkeit aufweist.

3. Verfahren nach Anspruch 1, dadurch gekennzeichnet, daß der Boden und die Seiten der Grube vor Einführung der Agglomerate in die Grube mit einer feuchtigkeitsundurchlässigen Auskleidung (4) abgedeckt werden.

4. Verfahren nach Anspruch 1, dadurch gekennzeichnet, daß die Tiefe der Grube größer als die Höhe der Matrix ist und daß die Matrix mit zusätzlichen Zuschlagsstoffen abgedeckt wird.

5. Verfahren nach Anspruch 1, dadurch gekennzeichnet, daß die Matrix vor dem Abdecken der Matrix mit zusätzlichem Zuschlagsstoff mit einer feuchtigkeitsundurchlässigen Auskleidung (4) abgedeckt wird.

6. Verfahren nach Anspruch 1, dadurch gekennzeichnet, daß das Mehl aus einem Pulver besteht, das eine erhebliche Menge an Oxiden enthält, die mit den Flüssigkeiten in den Agglomeraten unter Bildung von wasserunlöslichen Hydroxiden reagieren.

7. Verfahren nach Anspruch 6, dadurch gekennzeichnet, daß die Menge der Oxide Calciumoxid enthält.

8. Verfahren nach Anspruch 1, dadurch gekennzeichnet, daß die Agglomerate Sole enthalten.

9. Verfahren nach Anspruch 1, dadurch gekennzeichnet, daß das zementhaltige Bindemittel aus Zement besteht.

FIG.1

FIG.2

FIG.3

FIG.4

FIG.5